# EUROPÄISCHE PATENTSCHRIFT

(11) **EP 2 428 454 B1**
(45) Veröffentlichungstag und Bekanntmachung des Hinweises auf die Patenterteilung: **07.09.2016**
(21) Anmeldenummer: 11180616.2
(22) Anmeldetag: 08.09.2011
(51) Int. Cl.: B65B 25/06, B65B 41/06, B65B 65/00, B65B 5/02

(54) **ANORDNUNG EINES FOLIENSPENDERS, EINES FOLIENSCHWEISSGERÄTES UND EINER ÜBERGABEVORRICHTUNG**
ASSEMBLY OF A FILM DISPENSER, A FILM WELDING DEVICE AND A TRANSFER DEVICE
AGENCEMENT D'UN DISTRIBUTEUR DE FEUILLES, D'UN APPAREIL DE SOUDAGE DE FEUILLES ET D'UN DISPOSITIF DE TRANSFERT

(30) Priorität: 09.09.2010 AT 56510 U
(43) Veröffentlichungstag der Anmeldung: 14.03.2012
(73) Patentinhaber: Kuchler, Fritz, 9020 Klagenfurt (AT)
(72) Erfinder: Kuchler, Fritz, 9020 Klagenfurt (AT)
(74) Vertreter: Müllner, Martin

(56) Entgegenhaltungen:
- EP-B1- 0 849 177
- EP-B1- 1 260 327
- AT-B1- 500 725

## Beschreibung

Die Erfindung betrifft eine Anordnung eines Folienspenders, eines Folienschweißgerätes und einer Übergabevorrichtung der Folien vom Folienspender an das Schweißgerät für die Verpackung von geschnittenem Gut, insbesondere von Wurstscheiben, die von einer Aufschnittschneidemaschine geschnitten wurden, wobei die Übergabevorrichtung als separate allenfalls nachrüstbare Baueinheit über einen Schwenkarm mit einem Greiferkopf mit Saugnäpfen zur Erfassung der Folien verfügt und in Abständen zwischen dem Folienspender und dem Folienschweißgerät positioniert ist, in welchem Greiferkopf die Saugnäpfe in den beiden Endstellungen des Schwenkarmes einerseits über einer Ausgabeposition des Folienspenders, insbesondere einem Ausgabepult, und anderseits über einem Auflegebereich des Folienschweißgerätes liegen.

Aus der EP 0849177 B ist eine Aufschnittschneidemaschine mit Verpackungseinrichtung bekannt. Die Aufschnittschneidemaschine ist mit einer Schweißstation ausgestattet, die hinter einer Ablegeeinrichtung der Aufschnittschneidemaschine auf deren Maschinengehäuse fest angeordnet ist. Ein Aufschnitt wird unter der Ablegeeinrichtung durchgeschoben, die Unterlagsfolie mit der Deckfolie verschweißt und das Paket dann ausgeworfen. Ein Folienspender und eine Übergabevorrichtung sind der Aufschnittschneidemaschine für das Auflegen der Folien auf das Ablegetablett zugeordnet. Diese Komponenten müssen in einem Abstand zueinander aufgestellt werden, der die Funktion des Übernehmens der Folie vom Folienspender und des Ablegens der Folien auf das Ablegetablett ermöglicht. Nicht nur bei der erstmaligen Inbetriebnahme, sondern auch nach der täglichen Reinigung der Theke oder der Geräte selbst ist bei Neuaufstellung die Herstellung der erforderlichen Relativlage und eine Positionsüberprüfung erforderlich.

Weiters ist eine Aufschnittschneidemaschine gemäß der EP 1260327 B bekannt, bei welcher im linearen Durchlauf eine Folie unter der Ablegeeinrichtung hindurch dem Ablegetablett zugeführt, eine weitere Folie über einen Aufschnitt gezogen und das Paket einer Schweißeinrichtung über Förderbänder zugeführt wird. Eine Schweißeinrichtung für den in Rede stehenden Zweck, also zum Einschweißen von Aufschnitt, ist aus der AT 500725 B bekannt. Eine Ablagefläche für eine Auflagefolie, für den Aufschnitt und für eine Abdeckfolie ist von einem Andruckrahmen umgeben, der aus umklappbaren Leisten gebildet wird. Diese Leisten stehen vorerst senkrecht und umranden die zu verschweißenden Folien mit dem Aufschnitt. Wenn sie zueinander umklappen, dann spannen sie den Randbereich der Folien gewissermaßen ein. Diese Leisten verfügen über Heizdrähte und verschweißen die Folien zu einem dichten Paket.

Unabhängig von der Bauart einer Aufschnittschneidemaschine sind Verpackungseinrichtungen bekannt, die als Einzelgeräte angeboten werden. So gibt es neben der oben beschriebenen Schweißeinrichtung, auf die die Folien und der Aufschnitt händisch aufgelegt werden können, auch Folienspender. Diese umfassen eine Folienrolle mit einer elektrisch angetriebenen Abrolleinrichtung sowie eine Schneidvorrichtung zur Vereinzelung in z.B. rechteckige oder quadratische Folienzuschnitte. Einer dieser Folienspender weist unterhalb einer Abgabeposition für die Folienzuschnitte eine Lichtschranke bzw. einen Sensor auf, der den Antrieb zum Abziehen eines Folienzuschnittes einschließlich der Schneidevorrichtung aktiviert und somit ein Folienblatt als Folienzuschnitt griffgerecht bereitstellt, sobald man auf das Gerät zugreift.

Um ein händisches Umlegen auf das Folienschweißgerät aus arbeitstechnischen und hygienischen Gründen zu vermeiden, wurde erfindungsgemäß eine Anordnung mit in ihrer Relativlage gesicherten Einzelkomponenten der eingangs beschriebenen Art geschaffen, die dadurch gekennzeichnet ist, dass Formschlussverbindungen zwischen der Übergabevorrichtung und dem Folienspender einerseits sowie dem Folienschweißgerät anderseits, vorzugsweise als Haken Schwalbenschwanzverbindungen bzw. gegenseitige Verriegelungen, zur Festlegung der Abstände zueinander oder auf einer Bodenplatte, vorzugsweise als Vertiefungen in dieser, zur formschlüssigen Aufnahme des Folienspenders, der Übergabevorrichtung und des Folienschweißgerätes in einer aufeinander abgestimmten Relativlage vorgesehen sind.

Wesentlich ist also die zwangsweise Lagefixierung des Folienspenders, der Übergabevorrichtung und des Folienschweißgerätes in einer aufeinander abgestimmten Relativlage, die einerseits ein Erfassen der Folien von dem Ausgabepult des Folienspenders und anderseits das Ablegen der Folien im Auflagebereich des Folienschweißgerätes in den Endstellungen des Schwenkarmes gewährleistet. Es wird das Aufstellen, der Betrieb und das Positionieren nach der täglichen Reinigung erleichtert und so der Betrieb funktionssicher gestaltet. Als Formschlusselemente können auch Stiftverbindungen bzw. Einschubleisten und Verriegelungen auf der Bodenplatte und bzw. oder auf dem Sockel der jeweiligen Komponenten (Folienspender, Übergabevorrichtung und Folienschweißgerät) vorgesehen sein. Es ist zweckmäßig, wenn die Übergabevorrichtung mit dem Folienspender und dem Folienschweißgerät nicht nur mechanisch lagefixierend, sondern auch elektrisch miteinander gekuppelt sind. Die Relativlage und auch die Übertragung der Steuerbefehle sind damit gesichert.

Im Zusammenhang mit einer entsprechend vorbereiteten Aufschnittschneidemaschine sieht eine besondere Ausgestaltung der Erfindung vor, dass das Folienschweißgerät im Ablegebereich einer Aufschnittschneidemaschine gegebenenfalls längsverschiebbar für ein überlappendes Ablegen von Schnittgutscheiben vorgesehen und in eine Beladeposition für Folien auf der Aufschnittschneidemaschine verfahrbar ist, wobei seitlich der Beladeposition des Folienschweißgerätes an die Aufschnittschneidemaschine die Übergabevorrichtung und der Folienspender über die Formschlussverbindungen anschließen.

Man kann somit ursprünglich einzeln angekaufte Komponenten zu einer sehr zweckmäßigen Baugruppe kombinieren. Bei allen Anwendungsfällen der Erfindung ergibt sich ein weiterer und entscheidender Vorteil, wenn der Schwenkarm gegebenenfalls zusammen mit der Übergabevorrichtung oder einem Teil derselben seitlich aus der Flucht des aneinander gereihten Folienspenders, der Übergabevorrichtung und des Folienschweißgerätes, ausschiebbar gelagert ist und der Schwenkarm nach Entnahme einer verschweißten Verpackung vom Folienschweißgerät in eine Auswerferposition bzw. Abgabeposition der fertigen Verpackung schwenkt. Damit muss das fertig verschweißte Paket nicht aus dem allenfalls noch heißen Folienschweißgerät händisch entnommen werden. Es liegt in einer Auswerferposition bereit. Die Abfolge, nämlich das Beladen mit einer Basisfolie und - nach Auflegen eines Aufschnittes - das Abdecken mit einer weiteren Folie (allenfalls auch von Zwischenfolien), das Verschweißen und das Entnehmen, wird vollautomatisch gesteuert, weil die Komponenten elektrisch miteinander verbunden sind und Steuerbefehle nach einem händischen Einschaltbefehl weitergeben. Bei Beenden des Auflegens von geschnittenem Gut wird von Hand aus das Auflegen der Abdeckfolie und das Schweißen sowie (wenn gewünscht) das Auswerfen als Zyklus eingeschaltet. Auch dazu können Sensorschalter vorgesehen sein. Erfolgt das Auflegen von geschnittenem Gut direkt durch eine Aufschnittschneidemaschine, dann kann diese bei Abschalten der Ablegevorrichtung gleichzeitig das Schweißen und spätere Auswerfen starten.

Eine weitere Möglichkeit für ein Auswerfen aus der Schweißeinrichtung ergibt sich dadurch, dass der Greiferkopf zum Verdrehen in eine Abgabeposition um die Längsachse des Schwenkarmes um vorzugsweise 180° drehbar angeordnet ist. Es wird eine Verpackung aus dem Folienschweißgerät vom Greiferkopf mit den Saugnäpfen erfasst, hochgeschwenkt und nach Verdrehen des Greiferkopfes neben dem Schweißgerät oder neben dem Folienspender in eine Auswerferposition oder Abgabeposition abgelegt.

Ausführungsbeispiele zum Erfindungsgegenstand sind in den Zeichnungen dargestellt.
- Fig. 1: zeigt eine Baugruppe bestehend aus einem Folienspender, einer Übergabevorrichtung und einem Schweißgerät mit gegenseitiger Lagefixierung in Prinzipdarstellung von der Seite,
- Fig. 2: eine Anordnung ähnlich Fig. 1 jedoch in einer Variante der Lagefixierung als Detail,
- Fig. 3: eine Draufsicht auf eine Anordnung der Baugruppe gemäß Fig. 1 und
- Fig. 4: eine Seitenansicht der Anordnung in Verbindung mit einer Aufschnittschneidemaschine.

### Beschreibung der Ausführungsarten

Ein Folienspender 1 weist eine Halterung für eine Folienrolle 2 auf. Eine Folienbahn 3 wird von einer elektrisch angetriebenen Folienfördervorrichtung 4 von der Folienrolle 2 abgezogen und einer Schneidevorrichtung 5 zugeführt, von welcher die Folie 6 als Folienzuschnitt auf ein Ausgabepult 7 gelangt. Eine Steuerung 8 setzt bei Aktivierung durch einen Schalter 9 (z.B. eine Lichtschranke oder einen Sensor) den Ablauf in Gang.

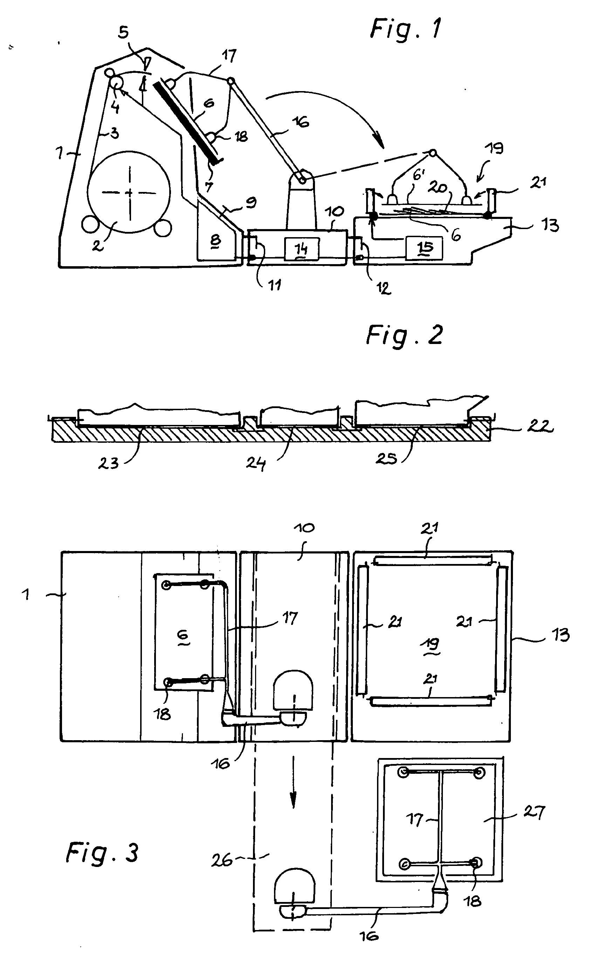

Mit dem Folienspender 1 ist gemäß Fig. 1 eine Übergabevorrichtung 10 formschlüssig verbunden. Dargestellt sind bloß Haken 11 und 12, wobei Haken 12 die formschlüssige Verbindung mit einem Folienschweißgerät 13 symbolisiert. Mit der Formschlussverbindung geht jeweils auch eine elektrische Verbindung Hand in Hand, um die jeweiligen Steuergeräte 8, 14, 15 funktionsgerecht zu aktivieren und den Ablauf der Bereitstellung der Folie 6 bis zur fertigen Verpackung zu ermöglichen.

Die Übergabevorrichtung 10 weist einen Schwenkarm 16 auf, an dessen freiem Ende ein Greiferkopf 17 mit Saugnäpfen 18 angelenkt ist. Die Übergabevorrichtung 10 verfügt über eine Saugpumpe, die über Rohrleitungen mit den Saugnäpfen 18 in Verbindung steht. Auf Grund eines Steuerbefehls von der Steuerung 14, ausgelöst über die Steuerung 8 ab der Bereitstellung der Folie 6, schwenkt der Schwenkarm 16 über das Ausgabepult 7, wobei der Greiferkopf 17 mit seinen Saugnäpfen 18 parallel zur Fläche des Ausgabepultes 7 gestellt wird. Dies kann mechanisch bei Annäherung an den Folienspender 1 erfolgen, indem der schwenkbare Greiferkopf 17 gegen eine Kulisse an dem Gehäuse des Folienspenders 1 anläuft und von dieser parallel zum Ausgabepult 7 ausgerichtet wird. Die Steuerung 14 aktiviert die Saugpumpe, sodass die Saugnäpfe 18 die Folie 6 ansaugen und aufnehmen. Die Steuerung 14 gibt den Umschwenkbefehl um z.B. 120° an den Schwenkantrieb des Schwenkarmes 16, sodass die Folie 6 auf Grund der Abstimmung der Gehäuseabmessungen von Folienspender 1, Übergabevorrichtung 10 und Folienschweißgerät 13 exakt über dem Auflegebereich 19 der Schweißeinrichtung 13 abgeworfen werden kann. Dazu wird die Saugpumpe durch die Steuerung 14 abgeschaltet bzw. ganz kurz auf Druck umgeschaltet (z.B. die Saugleitungen kurz mit der Druckseite der Saugpumpe verbunden). Der Schwenkarm 16 schwenkt dann in eine Wartestellung. Auf die Folie 6 in dem Folienschweißgerät 13 wird das geschnittene Gut (z.B. Aufschnitt 20) aufgelegt. Dann wird der Vorgang neuerlich gestartet (Schalter 9). Eine Folie 6' wird bereitgestellt und über den Aufschnitt 20 abgelegt. Die Steuerung 15 aktiviert das Umklappen der Leisten 21, die mit elektrischen Widerstandsdrähten zur Beheizung ausgestattet sind. Die Leisten 21 klemmen die Folien 6 und 6' randseitig ein und verschweißen die Ränder, sodass ein luftdichtes Folienpaket mit dem Aufschnitt 20 entsteht.

Während gemäß Fig. 1 die Lagefixierung der drei Komponenten unmittelbar durch Formschlusselemente (z.B. Haken 11, 12 oder Schwalbenschwanzverbindungen bzw. Verriegelungen) erfolgt, zeigt Fig. 2 eine gemeinsame Bodenplatte 22, die Formschlusselemente zur Lagefixierung der drei Komponenten aufweist. Es sind dies bei diesem Ausführungsbeispiel Vertiefungen 23, 24 und 25, in die die Komponenten hineinpassen und dort auch verriegelt werden können. Das Bodenniveau für die Komponenten kann unterschiedliche Höhen aufweisen. Die Bodenplatte 22 kann über Steckverbindungen verfügen (nicht dargestellt) um die einzelnen Steuerungen 8, 14, 15 mit aufeinander abgestimmten Funktionen zu starten.

Fig. 3 zeigt die Anordnung gemäß Fig. 1 in Prinzipdarstellung von oben. Man erkennt an der mittig vorgesehenen Übergabevorrichtung 10 einen seitlich ausfahrbaren Schlitten 26, der den Antrieb zusammen mit den Schwenkarm 16 und den Greiferkopf 17 trägt. Sobald das Verschweißen auf dem Folienschweißgerät 13 beendet und die Leisten 21 wieder hochgeklappt sind, kann der Schwenkarm 16 mit seinem Greiferkopf 17 und den Saugnäpfen 18 das fertige Paket erfassen und hochschwenken. Der Schlitten 26 wird über eine Spindel oder Zahnstange auf Befehl der Steuerung 14 in die in Fig. 3 strichliert dargestellte Position ausgefahren und der Greiferarm 16 in eine etwa waagrechte Position (Auswerferposition) geschwenkt. Die Saugnäpfe 18 stoßen nach Abschaltung bzw. Umschaltung der Saugpumpe auf einen Druckluftimpuls das fertige Paket 27 wieder ab und deponieren dieses auf einer Serviertasse bzw. allenfalls auf einer Waage.

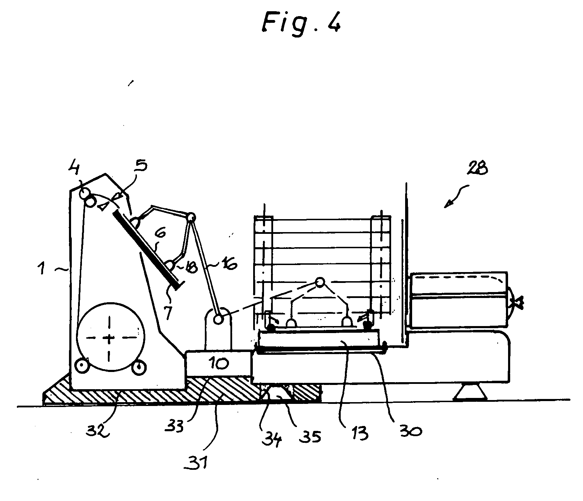

Fig. 4 zeigt eine erfindungsgemäße Anordnung zusammen mit einer Aufschnittschneidemaschine 28 mit Ablegeeinrichtung. Auf einem in und aus der Zeichenebene ein- und ausfahrbarem Ablegetablett 30 zur Ablage von in Zeilen und Spalten überlappendem Aufschnitt ist das Folienschweißgerät 13 angeordnet. Das Folienschweißgerät 13 kann in eine Beladeposition gebracht werden, welche beispielsweise der Grundstellung des Ablegetabletts 30 auf der Aufschnittschneidemaschine 28 entspricht. In dieser Stellung des Folienschweißgerätes schließen seitlich gemäß Fig. 4 die Übergabevorrichtung 10 und der Folienspender 1 an. Diese sind starr aber lösbar miteinander und mit der Aufschnittschneidemaschine 28 gekuppelt (mechanisch und elektrisch hinsichtlich der Steuerbefehle). Diese gegenseitige Lagefixierung wird hier in Fig. 4 beispielsweise durch eine Bodenplatte 31 erreicht, die eine Ausnehmung 32 für den Folienspender 1 sowie ein Podest 33 für die Übergabevorrichtung 10 aufweist. Die Bodenplatte 31 untergreift das Gehäuse der Aufschnittschneidemaschine 28 und ist mit Durchbrüchen 34 ausgestattet, welche die Stützfüße 35 durchgreifen. Die relative Lage der Komponenten wird so durch die Bodenplatte 31 vorgegeben und damit sichergestellt, dass der Schwenkarm 16 genau das Ausgabetablett 7 des Folienspenders 1 wie auch den Auflegebereich 19 des Folienschweißgerätes 13 erreicht.

## Patentansprüche

1. Anordnung eines Folienspenders (1), eines Folienschweißgerätes (13) und einer Übergabevorrichtung (10) der Folien (6) vom Folienspender (1) an das Folienschweißgerät (13) für die Verpackung von geschnittenem Gut, insbesondere von Wurstscheiben, die von einer Aufschnittschneidemaschine (28) geschnitten wurden, wobei die Übergabevorrichtung (10) als separate, allenfalls nachrüstbare Baueinheit über einen Schwenkarm (16) mit einem Greiferkopf (17) mit Saugnäpfen (18) zur Erfassung der Folien (6) verfügt und in Abständen zwischen dem Folienspender (1) und dem Folienschweißgerät (13) positioniert ist, in welchem Greiferkopf die Saugnäpfe (18) in den
beiden Endstellungen des Schwenkarmes (16) einerseits über einer Ausgabeposition des Folienspenders (1), insbesondere einem Ausgabepult, und anderseits über einem Auflegebereich des Folienschweißgerätes (13) liegen, **dadurch gekennzeichnet, dass** Formschlussverbindungen zwischen der Übergabevorrichtung (10) und dem Folienspender (1) einerseits sowie dem Folienschweißgerät (13) anderseits, vorzugsweise als Haken (11, 12), Schwalbenschwanzverbindungen bzw. gegenseitige Verriegelungen, zur Festlegung der Abstände zueinander oder auf einer Bodenplatte, vorzugsweise als Vertiefungen (23, 24, 25) in dieser, zur formschlüssigen Aufnahme des Folienspenders (1), der Übergabevorrichtung (10) und des Folienschweißgerätes (13) in einer aufeinander abgestimmten Relativlage vorgesehen sind.

2. Anordnung nach Anspruch 1, **dadurch gekennzeichnet, dass** die Übergabevorrichtung (10) mit dem Folienspender (1) und dem Folienschweißgerät (13) mechanisch lagefixierend und auch elektrisch miteinander gekuppelt sind.

3. Anordnung nach Anspruch 1, **dadurch gekennzeichnet, dass** das Folienschweißgerät (13) im Ablegebereich einer Aufschnittschneidemaschine (28) gegebenenfalls längsverschiebbar für ein überlappendes Ablegen von Schnittgutscheiben vorgesehen und in eine Beladeposition für Folien (6, 6') auf der Aufschnittschneidemaschine (28) verfahrbar ist, wobei seitlich der Beladeposition des Folienschweißgerätes an die Aufschnittschneidemaschine (28) die Übergabevorrichtung (10) und der Folienspender (1) über die Formschlussverbindungen anschließen.

4. Anordnung nach einem der Ansprüche 1 bis 3, **dadurch gekennzeichnet, dass** der Schwenkarm (16) gegebenenfalls zusammen mit der Übergabevorrichtung (10) oder einem Teil derselben seitlich aus der Flucht des aneinander gereihten Folienspenders (1), der Übergabevorrichtung (10) und des Folienschweißgerätes (13), ausschiebbar gelagert ist und der Schwenkarm (16) nach Entnahme einer verschweißten Verpackung (27) vom Folienschweißgerät (13) in eine Auswerferposition bzw. Abgabeposition der fertigen Verpackung (27) schwenkt.

5. Anordnung nach einem der Ansprüche 1 bis 3, **dadurch gekennzeichnet, dass** der Greiferkopf (17) zum Verdrehen in eine Abgabeposition um die Längsachse des Schwenkarmes (16) um vorzugsweise 180° drehbar angeordnet ist.

## Claims

1. An assembly of a foil dispenser (1), a foil welding unit (13) and a device (10) for transferring the foil (6) from the foil dispenser (1) to the foil welding unit (13) for packaging cut product, in particular slices of sausage, which have been cut by a cold-meat slicing machine (28), the transfer device (10), as a separate but retrofittable structural unit, being equipped with a pivot arm (16) having a gripper head (17) with suction cups (18) for grasping the foil (6) and being positioned in a space between the foil dispenser (1) and the foil welding unit (13), in which gripper head the suction cups (18) are located in the two end positions of the pivot arm (16), on the one hand by way of a delivery position of the foil dispenser (1), in particular a delivery platform, and on the other hand by way of a placement area of the foil welding unit (13), **characterized in that** positively-locking connections are provided between the transfer device (10) and the foil dispenser (1) on the one hand, and between the transfer device (10) and the foil welding unit (13) on the other hand, preferably as hooks (11, 12), dovetail connections, or interlocking latching devices, for determining the spacings of the units with respect to one another, or that the connections are provided on a base plate, preferably as indented regions (23, 24, 25) in this plate, for positively-locking accommodation of the foil dispenser (1), the transfer device (10) and the foil welding unit (13) in relative positions in which they are coordinated with one another.

2. An assembly according to Claim 1, **characterized in that** the transfer device (10) is mechanically coupled to the foil dispenser (1) and to the foil welding unit (13) in a positionally-fixed manner and these units are also electrically coupled to one another.

3. An assembly according to Claim 1, **characterized in that** the foil welding unit (13) is provided in the delviery region of a cold-meat slicing machine (28), optionally to be longitudinally displaceable for an overlapping laying-down of cut-product slices, and is movable on the cold-meat slicing machine (28) into a loading position for foils (6, 6'), the transfer device (10) and the foil dispenser (1) being connected to the cold-meat slicing machine (28), by the positively-locking connections, to the side of the loading position of the foil welding device.

4. An assembly according to any of Claims 1 to 3, **characterized in that** the pivot arm (16), optionally together with the transfer device (10) or a part of the same, is mounted to the side, outside of the line-up of the foil dispenser (1), the transfer device (10) and the foil welding unit (13) that follow one another in a row, and the pivot arm (16), after removal of a welded package (27) from the foil welding unit (13), pivots into an ejection or delivery position for the finished package (27).

5. An assembly according to any of Claims 1 to 3, **characterized in that** the gripper head (17) is rotatably arranged for pivotal movement about the longitudinal axis of the pivot arm (16), through preferably 180°, into a delivery position.

## Revendications

1. Système constitué d'un distributeur de feuilles (1), d'un appareil de soudage de feuilles (13) et d'un dispositif de transfert (10) des feuilles (6) du distributeur de feuilles (1) à l'appareil de soudage de feuilles (13), destiné à l'emballage d'objets tranchés, notamment de tranches de charcuterie qui viennent d'être tranchées par une trancheuse de cuisine (28), le dispositif de transfert (10) étant réalisé sous forme d'une unité séparée ou pouvant éventuellement être intégrée à l'ensemble ultérieurement, ladite unité étant pourvue d'un bras pivotant (16) comportant une tête de préhension (17) équipée de ventouses (18) destinées à saisir les feuilles (6) et étant positionnée entre le distributeur de feuilles (1) et l'appareil de soudage de feuilles (13), les ventouses (18) étant situées, dans les deux positions d'extrémité du bras pivotant (16), d'un côté en-dessus d'un poste de sortie du distributeur de feuilles (1), s'agissant notamment d'une table de sortie, et de l'autre côté en-dessus d'une zone de support de l'appareil de soudage de feuilles (13), **caractérisé en ce que** le dispositif de transfert (10) est relié, d'un côté au distributeur de feuilles (1) et de l'autre côté à l'appareil de soudage de feuilles (13), par complémentarité de forme, cette liaison étant préférentiellement réalisée sous forme de crochets (11, 12), de liaisons par queue d'aronde ou de verrouillages réciproques, pour ainsi définir les distances l'un de l'autre ou sur une plaque de fond, cette dernière étant préférentiellement pourvue de cavités (23, 24, 25) destinées à recevoir, par complémentarité de forme, le distributeur de feuilles (1), le dispositif de transfert (10) et l'appareil de soudage de feuilles (13) dans des positions adaptées les unes par rapport aux autres.

2. Système selon la revendication 1, **caractérisé en ce que** le dispositif de transfert (10) est couplé au distributeur de feuilles (1) et à l'appareil de soudage de feuilles (13) de manière à fixer mécaniquement leurs positions mais aussi à réaliser une connection électrique.

3. Système selon la revendication 1, **caractérisé en ce que** l'appareil de soudage de feuilles (13) est réalisé de manière à ce qu'il puisse éventuellement être déplacé longitudinalement au sein de la zone de dépôt d'une trancheuse de cuisine (28) pour déposer les tranches de façon à ce qu'elles se chevauchent, et qu'il puisse être manoeuvré, sur la trancheuse de cuisine (28), dans une position de charge de feuilles (6, 6'), le dispositif de transfert (10) et le distributeur de feuilles (1) étant situés, latéralement par rapport à ladite position de charge de l'appareil de soudage de feuilles, dans la prolongation de la trancheuse de cuisine (28), à laquelle ils sont reliés par complémentarité de forme.

4. System selon l'une des revendications 1 à 3, **caractérisé en ce que** le palier du bras pivotant (16) permet à ce dernier d'être déplacé, éventuellement ensemble avec le dispositif de transfert (10) ou une partie de celui-ci, de manière à quitter latéralement l'alignement formé par le distributeur de feuilles (1), le dispositif de transfert (10) et l'appareil de soudage de feuilles (13), et que le bras pivotant (16) pivote, après avoir retiré l'emballage (27) soudé de l'appareil de soudage de feuilles (13), dans une position d'éjection ou une position de dépôt de l'emballage (27) fini.

5. Système selon l'une des revendications 1 à 3, **caractérisé en ce que** la tête de préhension (17) est préférentiellement disposée de manière à pouvoir faire un tour de 180° autour de l'axe longitudinal du bras pivotant (16), pour ainsi être tourné dans une position de dépôt.
